# EUROPÄISCHE PATENTSCHRIFT

(11) **EP 0 449 024 B1**
(45) Veröffentlichungstag und Bekanntmachung des Hinweises auf die Patenterteilung: **12.01.1994**
(21) Anmeldenummer: 91103703.4
(22) Anmeldetag: 11.03.1991
(51) Int. Cl.: B65G 9/00

(54) **Fördermittel**
Conveying means
Moyen de transfert

(30) Priorität: 16.03.1990 DE 9003123 U
(43) Veröffentlichungstag der Anmeldung: 02.10.1991
(73) Patentinhaber: RSL LOGISTIK GMBH & CO, D-86899 Landsberg (DE)
(72) Erfinder: Robu, Johann, W-8037 Olching (DE); Robl, Rudolf, W-8910 Landsberg/Lech (DE)
(74) Vertreter: Grünecker, Kinkeldey, Stockmair & Schwanhäusser Anwaltssozietät

(56) Entgegenhaltungen:
- EP-A- 0 338 100
- EP-A- 0 343 399
- CH-A- 599 014
- DE-A- 3 520 037
- US-A- 4 206 850

## Beschreibung

Die Erfindung bezieht sich auf ein Fördermittel für ein Hängefördersystem der im Oberbegriff von Anspruch 1 erläuterten Art.

Ein derartiges Fördermittel ist der DE-B-19 40 256 zu entnehmen. Bei den bekannten Fördermitteln dieser Art sind die Teile einer Kupplung immer an den als Traversen ausgebildeten Tragelementen befestigt. Es hat sich jedoch herausgestellt, daß der Einsatzbereich und die Verwendbarkeit der bekannten Fördermittel durch diese Art der Anordnung der Kupplungsteile beschränkt wird, da kaum Spielraum für die Ausgestaltung der Traverse besteht bzw. der für die Kupplung benötigte Platz nicht zum Transport von Gegenständen zur Verfügung steht.

Die US-A-4 206 850 beschreibt ein Fördermittel, das mit nur einer einzigen, genuteten Laufrolle auf einer Schiene abgehängt ist. Auf der Achse der Laufrolle sitzt ein nach unten hängender Träger. Es sind weiterhin zwei Kupplungsteile in Form eines waagerecht umlaufenden Ringes und eines Hakens vorgesehen, die beide auf der Laufrollenachse befestigt sind, wobei der Haken um die Laufrollenachse schwenkbar ist.

Der Erfindung liegt die Aufgabe zugrunde, ein Fördermittel mit zwei Laufrollenträgern, die jeweils zwei über einen Bügel verbundene Laufrollen aufweisen besser an die speziellen Bedürfnisse anzupassen.

Die Aufgabe wird durch die kennzeichnenden Merkmale des Anspruches 1 gelöst.

Durch die erfindungsgemäße Anordnung der Kupplungsteile am Bügel des Laufrollenträgers kann das Tragelement auf einfache Weise entsprechend den Erfordernissen im Betrieb, d. h. beispielsweise der Arbeitshöhe, dem Platzbedarf oder der Kapazität, angepaßt werden. Darüber hinaus können auch Fördermittel mit unterschiedlichen Tragelementen zu einem gemeinsamen Zug zusammengestellt werden. Schließlich ist die Kurvengängigkeit durch senkrechte Kurven durch den geringen Abstand der Kupplung zur Schiene wesentlich verbessert, da weniger Verspannungen im Zug auftreten.

Von besonderem Vorteil ist es, wenn gemäß Anspruch 2 beide Kupplungsteile einer Kupplung an jedem Laufrollenträger angeordnet sind, und zwar an in Förderrichtung gegenüberliegenden Seiten des Bügels. Auf diese Weise ist es möglich, auch leere Fördernittel, bei denen in üblicher Weise einer der beiden Laufrollenträger aus der Schiene ausgeklinkt ist und zusammen mit dem Tragelement nach unten hängt, zu einem Leerzug zu koppeln und gemeinsam zu verfahren.

Besonders günstig kann die Zusammenstellung eines Leerzuges erfolgen, wenn das Tragelement gemäß Anspruch 3 um eine horizontale Achse schwenkbar angeordnet ist.

Durch die erfindungsgemäße Anordnung der Kupplungsteile an den Bügeln der Laufrollenträger ist es beispielsweise möglich, im wesentlichen die volle Zuglänge zum Transport von Gegenständen auszunutzen, indem das Tragelement gemäß Anspruch 4 über den Laufrollenträger vorstehend ausgebildet wird. Dabei können die Enden der Tragelemente, wie in Anspruch 5 angegeben, C-förmig oder annähernd C-förmig abgewinkelt sein. Letztere Ausgestaltung hat den weiteren Vorteil, daß leere Tragelemente platzsparend abgehängt werden können, indem sie mit einem ihrer C-förmigen Endstücke z. B. über ein Tragelement eines auf einer Schiene verfahrbaren Fördermittels gehängt werden.

Durch die erfindungsgemäße Anordnung der Kupplungsteile ist es weiterhin möglich, das Tragelement gemäß Anspruch 6 höhenverstellbar mit den Laufrollenträgern zu verbinden, so daß die Arbeitshöhe des Tragelementes verstellt werden kann, ohne daß dafür der Zug entkoppelt werden muß.

Eine konstruktiv besonders einfache Lösung für eine derartige Verstelleinrichtung ist den Ansprüchen 7 und 8 zu entnehmen.

Durch die Anordnung an Laufrollenbügel können die Kupplungsteile besonders einfach und robust ausgebildet werden, da die für korrekte Kurvenfahrten notwendigen Verschwenkwinkel der Kupplungsteile gegeneinander kleiner sind als bei Anordnung am Tragelement. Eine besonders geeignete Kupplung ist den Ansprüchen 9 bis 11 zu entnehmen.

Anspruch 12 beschreibt ein besonders einfach herzustellendes Fördermittel unter Verwendung eines C- bzw. V-förmigen Bügels.

Ausführungsbeispiele der Erfindung werden nachfolgend anhand der Zeichnungen näher erläutert. Es zeigen:
**Fig.** **1** ein erstes Ausführungsbeispiel der Erfindung,
**Fig.** **2** ein zweites Ausführungsbeispiel der Erfindung,
**Fig.** **3** eine vergroßerte Draufsicht auf eine Kupplungseinrichtung, und
**Fig.** **4** eine Seitenansicht der Fig. 3.

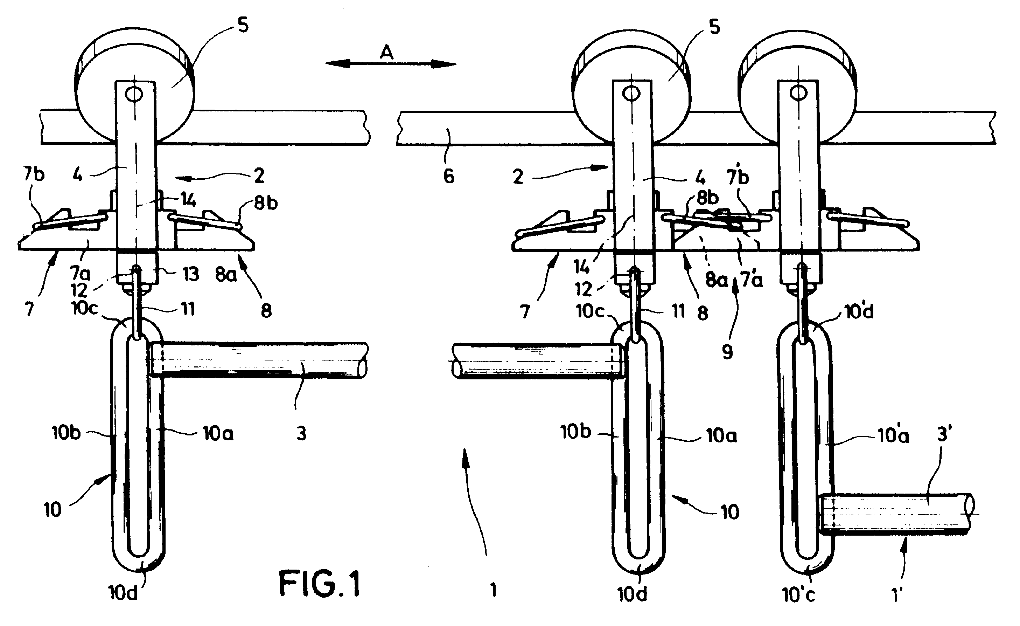

Aus Fig. 1 ist ein Fördermittel 1 ersichtlich, das zwei identisch ausgebildete Laufrollenträger 2 und ein die Laufrollenträger 2 verbindendes Tragelement in Form einer stabförmigen Traverse 3 aufweist, auf die auf Kleiderbügeln hängende Kleidungsstücke aufgehängt werden können. Das Tragelement kann jedoch auch andere, geeignete Formen aufweisen. Jeder der Laufrollenträger 2 enthält einen sich senkrecht zur Zeichnungsebene erstreckenden, V- bzw. C-förmigen Bügel 4 aus Kunststoff, der jeweils zwei im Winkel zueinander angeordnete Laufrollen, von denen jeweils nur eine Laufrolle 5 dargestellt ist und die andere Laufrolle senkrecht zur Zeichnungsebene dahinterliegt, miteinander verbindet. Die Laufrollen 5 rollen in Richtung des Doppelpfeiles A auf einer Schiene 6 ab, die in ebenfalls bekannter Weise zwei im Winkel der Laufrollen jedes Bügels dachförmig angeordnete Laufbahnen aufweist, von denen wiederum nur eine Laufbahn gezeigt ist.

An zwei sich in Förderrichtung A gegenüberliegenden Seiten jedes Laufrollenträgers 2 ist jeweils ein Kupplungsteil 7, 8 einer aus zwei Teilen bestehenden, automatisch kuppelnden handelsüblichen Kupplung 9 angeordnet. Beide Kupplungsteile 7, 8 bestehen aus Kunststoff und sind bevorzugt einstückig mit dem Bügel 4 gefertigt. Wie in Fig. 1 angedeutet, dient die Kupplung 9 zum Ankoppeln des Fördermittels 1 an ein weiteres Fördermittel 1' zum Bilden eines Förderzuges. Die Kupplungsteile 7, 8 bestehen in bekannter Weise aus zwei identisch ausgebildeten und mit Abstand senkrecht zur Zeichnungsebene am Bügel 4 befestigte Haken 7a bzw. 8a und jeweils einem schwenkbaren Bügel 7b bzw. 8b, der in Richtung senkrecht zur Zeichnungsebene so breit ist, daß er z.B. den Haken 8a des Fördermittels 1 sowie den Haken 7a' des Fördermittels 1' übergreift. Analog ist der Bügel 7b' des Fördermittels 1' so ausgebildet, daß er ebenfalls beide Haken übergreift. Die Bügel 7b, 8b können durch eine nach vorn weisende Schrägfläche eines benachbarten Hakens der Kupplungseinrichtung angehoben werden, so daß ein selbsttätiges Einkuppeln durch eine Bewegung der beiden zu kuppelnden Fordermittel 1 und 1' aufeinander zu möglich ist. In eingekuppeltem Zustand liegen die Haken einer Kupplung 9 mit Abstand senkrecht zur Zeichnungsebene hintereinander, so daß eine Kurvenfahrt durch horizontale Kurven nicht behindert wird. Bei einer Kurvenfahrt durch vertikale Kurven liegen die Kupplungsteile wesentlich näher zum Kurvenmittelpunkt als bei Anordnung an der Quertraverse, so daß die Kurvengängigkeit in vertikalen Kurven entscheidend verbessert wird.

Beide Enden der Quertraverse 3 sind mit jeweils einer biegesteifen Drahtschlaufe 10 verbunden. Die Drahtschlaufe 10 weist zwei lange, geradlinige und parallel zueinander verlaufende Schenkel 10a, 10b und zwei die Schenkel 10a, 10b an ihren Enden jeweils miteinander verbindende, im wesentlichen halbkreisförmige Drahtbögen 10c, 10d auf. Die Traverse 3 ist jeweils an dem nach innen weisenden, langen Schenkel 10a, 10b außerhalb ihrer Mitte und in der Nähe des Drahtbogens 10c befestigt. Durch jede der Drahtschlaufen 10 ist lose ein Schwenkbügel 11 oder ein lösbarer Befestigungsclip (Karabinerhaken od. dgl.) geführt, der um eine waagrechte und sich senkrecht zur Förderrichtung A erstreckende Achse 12 drehbar am Laufrollenträger 2 angeordnet ist. Der Drahtbügel 10 wirkt somit als Verstelleinrichtung für den Abstand der Traverse 3 von der Schiene 6, d.h., die Arbeitshöhe der Traverse 3. Zu diesem Zweck werden die Schwenkbügel 11 des Fördermittels 1 leicht nach außen und voneinander weggedrückt, so daß es möglich ist, die Drahtschlaufe umzukehren, so daß wahlweise entweder der Drahtbügel 10c oder der Drahtbügel 10d am Schwenkbügel 11 hängt. Hängt der Drahtbügel 10c am Schwenkbügel 11, so weist die Traverse 3 einen geringen Abstand zur Schiene auf, während der Abstand, wie anhand des Fördermittels 1' gezeigt, vergrößert werden kann, wenn der Drahtbügel 10d am Schwenkbügel 11 hängt.

Der Schwenkbügel 11 ist in einem Drehstück 13 gelagert, das um eine senkrechte Achse 14 verdrehbar am Bügel 4 angeordnet ist. Sollen somit leere Fördermittel 1 transportiert werden, so kann einer der beiden Laufrollenträger 2 jedes leeren Fördermittels 1 von der Schiene abgenommen werden. Durch die lose Anordnung der Drahtschlaufe 10 am Schwenkbügel 11 wird die Traverse 3 mit dem ausgeklinkten Laufrollenträger 2 nach unten hängen. Durch die Verdrehbarkeit um die Achse 14 können die ausgeklinkten Laufrollenträger 2 und die Traverse 3 zur Seite gedreht werden, so daß sie eine Koppelung der sich nunmehr nebeneinander befindenden, noch in Eingriff mit der Schiene 6 stehenden Laufrollenträger 2 der leeren Fördermittel nicht behindern. Auf diese Weise können auch leere Fördermittel in Zug transportiert werden.

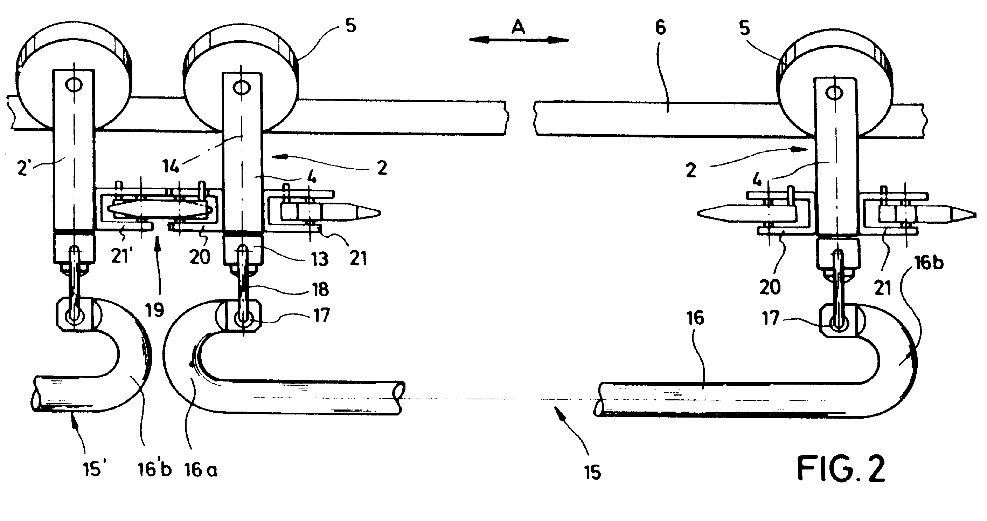

Fig. 2 zeigt ein weiteres Fördermittel 15, das sich vom Fördermittel 1 der Fig. 1 durch eine abweichende Gestaltung der Traverse 16 und eine abgewandelte Kupplung 19 unterscheidet. Zur Vereinfachung der Erläuterung sind mit dem ersten Ausführungsbeispiel vergleichbare Bauteile mit den gleichen Bezugszeichen versehen und nicht nochmals erläutert. Die Enden der Traverse 16 weisen C-förmig gebogene Endstücke 16a bzw. 16b auf, die in Förderrichtung A über die jeweils zugeordneten Laufrollenträger 2 so weit vorstehen, daß im wesentlichen der gesamte, für die Kupplung 9 benötigte Platz zwischen den Fördermitteln 15 bzw. 15' zum Transport von Gegenständen zur Verfügung steht. Die freien Enden der C-förmigen Endstücke 16a bzw. 16b enthalten eine Bohrung 17, durch die sich ein Bügel 18 lose erstreckt. Der Bügel 18 kann, muß jedoch nicht, analog des Schwenkbügels 11 ausgestaltet und schwenkbar am Drehstück 13 des Laufrollenträgers 2 angeordnet sein. Auf jeden Fall sollte der Bügel 18 jedoch so lang sein, daß die Traverse 16 in senkrechter Richtung verschwenken kann, wenn ein Laufrollenträger 2 des Fördermittels 15 von der Schiene 6 abgenommen wird.

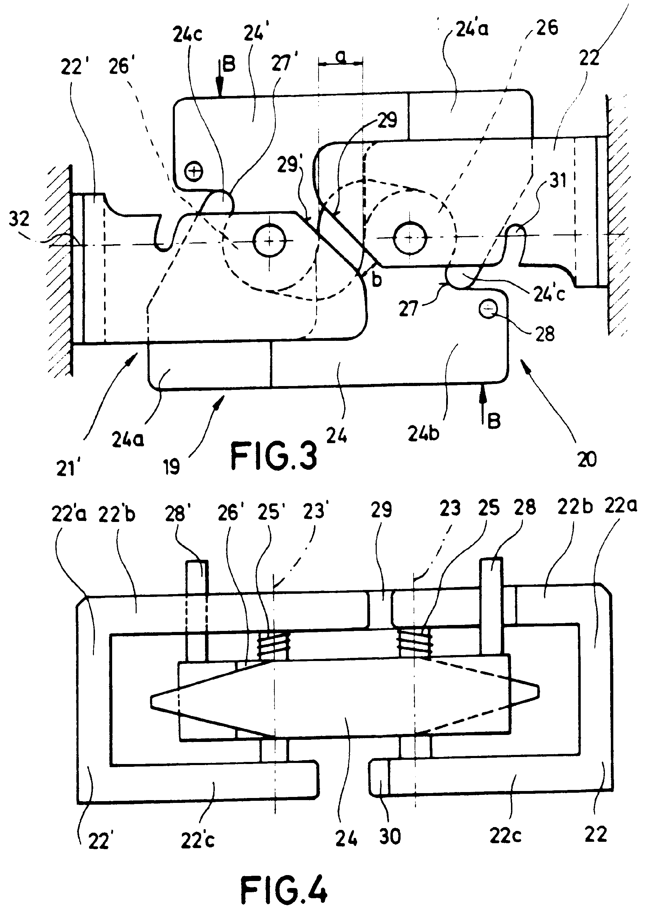

Die Kupplung 19 enthält, wie auch aus den Figuren 3 und 4 ersichtlich, jeweils zwei identisch ausgebildete, jedoch um 180 Grad verdreht an beiden in Förderrichtung A weisenden Seiten des Bügels 4 des Laufrollträgers 2 angeordnete Kupplungsteile 20 und 21. In den Figuren 3 und 4 ist diejenige Kupplung 19 dargestellt, die das Fördermittel 15 mit dem Fördermittel 15' aus Figur 2 miteinander verbindet. Aus Gründen der übersichtlichkeit wird zunächst das Kupplungsteil 20 dieser Kupplung näher erläutert, wobei die entsprechenden Bestandteile des Kupplungsteiles 21' mit den gleichen Bezugszeichen, jedoch ergänzt um einen Hochstrich, versehen wurden. Das Kupplungsteil 20 besteht aus einem U-förmigen Basisteil 22, das mit seinem Steg 22a in senkrechter Richtung am Bügel 4 des Laufrollenträgers 2 lösbar oder fest angeordnet bzw., bei Verwendung von Kunststoff, einstückige angespritzt ist. Zwischen dem oberen Schenkel 22b und dem unteren Schenkel 22c ist um eine als Stift ausgebildete Drehachse 23 ein Haken 24 in horizontaler Richtung verschwenkbar. Wie Figur 4 zeigt, ist der Haken 24 schmaler als der Abstand zwischen den Schenkeln 22b, 22c des Basisteiles 22. Um den Stift der Drehachse 23 ist eine Schenkelfeder 25 angeordnet, die mit einem Ende im oberen Schenkel 22b und mit ihrem anderen Ende im Haken 24 verankert ist. Die Schenkelfeder 25 ist derart angeordnet, daß sie den Haken aus jeder verchwenkten Stellung in die in Figur 3 gezeigte Koppelungsstellung zurückführen kann. Im Bereich des Hakens 24 ist der die Drehachse 23 enthaltende Stift in einer Nabe 26 befestigt, deren äußerer Durchmesser der öffnung des Hakens 24 derart angepaßt ist,daß sie von der Hakenöffnung des Hakens 24' des korrespondierenden Kupplungsteiles 21' mit Spiel umgriffen werden kann. In seinem vom Laufrollenträger 2 gesehen jenseits der Drehachse 23 liegenden, vorderen Bereich 24a verjüngt sich der Querschnitt des Hakens 24 nach vorn, so daß sich im Längsschnitt eine dreieckige bzw. trapezförmige Schnittfläche ergibt. Im hinteren Bereich 24b ist in einer Lage zwischen der Drehachse 23 und dem Steg 22a am Haken eine Druckfläche 27 für die Hakenspitze 24c' des korrespondierenden Kupplungsteiles 21' vorgesehen. Ebenfalls im hinteren Bereich 24b des Hakens 24, zwischen der Drehachse 23 und dem Steg 22a ist am Haken 24 ein Stift 28 angeordnet, der über die Oberfläche des Hakens und über den oberen Schenkel 22b nach oben vorsteht und zum Lösen der Kupplung dient.

Der obere Schenkel 22b des Basisteiles 22 steht, zumindest über einen Teil seiner Breiter, nach vorn über den unteren Schenkel 22c vor. Die vordere Stirnfläche des oberen Schenkels 22b verläuft zumindest über einen Bereich 29 schräg zur Förderrichtung A. Zumindest in dem Bereich der Abschrägung 29, in dem der obere Schenkel 22b nicht mehr über dem unteren Schenkel 22c vorsteht, enthält auch die Stirnfläche des unteren Schenkels 22c einen abgeschrägten Bereich 30. Im oberen Schenkel ist eine Nut 31 vorgesehen, in die der Stift 28 bei einem Verschwenken des Hakens eingreifen kann.

Die korrespondieren Kupplungsteile 20, 21' sind an ihren jeweiligen Laufrollenträgern 2, 2' derart angeordnet, daß die Drehachsen 23 und 23' auf einer Geraden 32 liegen, die parallel zur Förderrichtung A auf der Schiene 6 verläuft. Die Hakenspitzen 24c und 24c' erstrecken sich über die Gerade 32 hinaus, so daß die jeweiligen Naben 26 bzw. 26' sicher umfaßt werden können. Im eingekuppelten Zustand liegen die Hakenspitzen 24c, 24c' an den entsprechenden Druckflächen 27, 27' an. Die Kupplungsteile 20, 21' sind derart bemessen, daß die Naben 26, 26' im gekoppelten Zustand einen Abstand a und die Abschrägungen 29, 29' einen Abstand b zueinander aufweisen. Durch beide Abstände und durch den spitz zulaufenden Querschnitt jedes Hakens in seinem vorderen Bereich können sich die Kupplungsteile 20, 21' während des Durchfahrens von vertikalen Kurven gegeneinander verkippen, wobei Kippstellungen von etwa 15 Grad zur horizontalen Ausichtung problemlos bewältigt werden können. Bei Durchfahrt horizontaler Kurven wird der Haken des zuerst in die Kurve gehenden Laufrollenträgers um seine Drehachse verschwenkt, wodurch sich seine Lage bezüglich der Nabe des korrespondierenden Kupplungsteiles verändert. Durch die in Anlage an den Druckflächen 27 bzw. 27' befindlichen Hakenspitzen 24c, 24c' wird jedoch der Haken des korrespondierenden Kupplungsteiles analog ausgelenkt, so daß die Kupplung nicht gelöst werden kann. Da auch die Laufrollenträger eine gewisse Einstellmöglichkeit zum Krümmungsmittelpunkt der Kurve besitzen, sind mit dieser Kupplung horizontale Verschwenkungen der beiden Kupplungsteile zueinander im Bereich zwischen 30 und 45 Grad möglich.

Zum Lösen der Kupplung reicht es aus, den Stift 28 bzw. 28' eines der beiden Kupplungsteile 20, 21' durch eine geeignete Führung in Richtung auf die Gerade 32 zu drücken, so daß der Stift in die Nut 31 bzw. 31' eintauchen kann. Dadurch schwenkt der betätigte Haken aus seinem Eingriff mit der Nabe und drückt über die Druckfläche 27 bzw. 27' auch den Haken des korrespondierenden Kupplungsteiles aus dem Eingriff mit seiner Nabe. Der gleiche Lösungseffekt wird erzielt, wenn in Richtung des Pfeiles B in Figur 3 auf einen der Haken ein manueller Druck ausgeübt wird.

Das Koppeln kann entweder durch manuelles oder automatisches Ausschwenken der Haken oder selbsttätig dadurch erfolgen, daß die mit den zu koppelnden Kupplungsteilen versehenen Laufrollenträger gegeneinander bewegt werden. Dabei stoßen die abgeschrägten Stirnflächen der Haken gegeneinander und drücken sich gegenseitig in eine Stellung, aus der sie über die jeweils gegenüberliegende Nabe, unterstützt durch die Schenkelfeder 25, 25', greifen können.

In Abwandlung der beschriebenen und gezeichneten Ausführungsbeispiele können Einzelheiten der Zeichnungen untereinander ausgetauscht werden. So kann beispielsweise das Fördermittel nach Figur 1 mit der Kupplung nach Figur 2 bzw. das Fördermittel nach Figur 2 mit der Kupplung nach Figur 1 versehen werden. Auch die Verwendung anderer, bekannter Kupplungen ist möglich. Falls der Transport von Leerfördermitteln nicht notwendig ist bzw. nicht unbedingt platzsparend durchgeführt werden muß, so ist es möglich, die Teile einer Kupplung in üblicher Weise lediglich am Anfang und am Ende des Fördermittels vorzusehen. Die Verstelleinrichtung kann beispielsweise anstelle der Drahtschlaufe einen umhängbaren, C-förmigen oder einen in verschiedene Höhen einsteckbaren Träger enthalten. Durch zweckmäßige konstruktive Ausgestaltung können weiterhin mehr als zwei Verstellmöglichkeiten vorgesehen werden. Anstelle der C-förmigen Endstücke können auch U-förmige oder andere geeignete Endstücke verwendet werden. Schließlich ist es durchaus möglich, die bügelförmigen Laufrollenträger aus Kunststoff mit angespritzten Kupplungsteilen auch für andere Fördermittel einzusetzen.

## Patentansprüche

1. Fördermittel für ein Hängefördersystem, mit zwei Laufrollenträgern (2) zum Abrollen auf einer Schiene (6) und einem mit den Laufrollenträgern (2) verbundenen Tragelement (3), auf den zu fördernde Gegenstände anzuordnen sind, wobei jeder Laufrollenträger (2) zwei über einen Bügel (4) miteinander verbundene Laufrollen (5) aufweist, und mit einem Kupplungsteil (7, 8, 20, 21) zum Ankoppeln an ein korrespondierendes Kupplungsteil eines weiteren Fördermittels, **dadurch gekennzeichnet**, daß das Kupplungsteil (7, 8, 20, 21) am Bügel (4) des Laufrollenträgers (2) angeordnet ist.

2. Fördermittel nach Anspruch 1, **dadurch gekennzeichnet,** daß am Bügel (4) des Laufrollenträgers (2) zwei Kupplungsteile (7, 8, 20, 21) angeordnet sind, wobei das erste Kupplungsteil (7, 20) an einer Seite des Bügels (4) und das zweite Kupplungsteil (8, 21) an der gegenüberliegenden Seite des Bügels (4) angeordnet ist.

3. Fördermittel nach einem der Ansprüche 1 oder 2, **dadurch gekennzeichnet,** daß das Tragelement (3, 16) an wenigstens einem Laufrollenträger (2) in vertikaler Richtung schwenkbar angeordnet ist.

4. Fördermittel nach einem der Ansprüche 1 bis 3, **dadurch gekennzeichnet,** daß das Tragelement (16) in Förderrichtung (A) über den Laufrollenträger (2) vorsteht.

5. Fördermittel nach Anspruch 4, **dadurch gekennzeichnet,** daß das Tragelement (16) mit im wesentlichen C-förmigen Endstücken (16a, 16b) an den Laufrollenträgern (2) angeordnet ist.

6. Fördermittel nach einem der Ansprüche 1 bis 4, **dadurch gekennzeichnet,** daß das Tragelement (3) über eine Verstelleinrichtung (10) zum Verändern des Abstandes zwischen dem Tragelement (3) und der Schiene (6) mit den Laufrollenträgern (2) verbunden ist.

7. Fördermittel nach Anspruch 6, **dadurch gekennzeichnet,** daß die Verstelleinrichtung einen langgestreckten Schenkel (10a, 10b) enthält, an dem das Tragelement (3) außermittig befestigt ist, und daß beide Enden des Schenkels (10a, 10b) wahlweise in eine dem Laufrollenträger (2) benachbarte Lage zu bringen sind.

8. Fördermittel nach Anspruch 7, **dadurch gekennzeichnet,** daß der Schenkel (10a, 10b) Teil einer Drahtschlaufe (10) ist.

9. Fördermittel nach einem der Ansprüche 1 bis 8, **dadurch gekennzeichnet,** daß jedes Kupplungsteil (20, 21) ein starr mit dem Bügel (4) des Laufrollenträgers (2) verbundenes Basisteil (22) und einen mit einer Nabe (26) versehenen, in horizontaler Richtung um eine Drehachse 823) schwenkbar im Basisteil (22) angeordneten Haken (24) aufweist, wobei die Naben (26) beider Kupplungsteile (20, 21) im gekoppelten Zustand vom Haken (24) des jeweils anderen Kupplungsteiles (21, 20) umgriffen ist.

10. Fördermittel nach Anspruch 9, **dadurch** **gekennzeichnet,** daß jeder Haken (24) in einem vorderen, sich in Richtung auf das korrespondierende Kupplungsteil (20, 21) erstreckenden Bereich (24a) einen sich nach vorn verjüngenden Querschnitt aufweist.

11. Fördermittel nach Anspruch 9 oder 10, **dadurch** **gekennzeichnet,** daß jeder Haken (24) im vorderen Bereich (24a) zum Eingriff mit einem hinteren, zwischen der Nabe (26) und dem Bügel (4) des Laufrollenträgers (2) liegenden Bereich (24b) des jeweils korrespondierenden Kupplungsteils (20, 21) ausgebildet ist.

12. Fördermittel für ein Hängefördersystem nach einem der Ansprüche 1 bis 11, **dadurch gekennzeichnet,** daß der Laufrollenträger (2) einen V- oder C-förmigen Bügel (4) aus Kunststoff aufweist, an dem wenigstens ein Kupplungsteil (7, 8, 20, 21) angeformt ist.

## Claims

1. Conveying device for an overhead conveyor system with two roller carriers (2) running on a rail (6) and a support element (3), on which articles to be conveyed are to be mounted, connected to the roller carriers (2), each roller carrier (2) having two running rollers (5) connected to one another by a yoke (4), and with a coupling part (7, 8, 20, 21) for coupling to a mating coupling part on another conveying device, characterized in that the coupling part (7, 8, 20, 21) is mounted on the yoke (4) of the roller carrier (2).

2. Conveying device according to Claim 1, characterized in that two coupling parts (7, 8, 20, 21) are mounted on the yoke (4) of the roller carrier (2), the first coupling part (7, 20) being arranged on one side of the yoke (4) and the second coupling part (8, 21) on the opposite side of the yoke (4).

3. Conveying device according to either of Claims 1 and 2, characterized in that the support element (3, 16) is mounted so as to be pivotable in the vertical direction on at least one roller carrier (2).

4. Conveying device according to one of Claims 1 to 3, characterized in that the support element (16) projects beyond the roller carrier (2) in the conveying direction (A).

5. Conveying device according to Claim 4, characterized in that the support element (16) is mounted on the roller carriers (2) by essentially C-shaped end pieces (16a, 16b).

6. Conveying device according to one of Claims 1 to 4, characterized in that the support element (3) is connected to the roller carriers (2) by an adjusting device (10) for altering the distance between the support element (3) and the rail (6).

7. Conveying device according to Claim 6, characterized in that the adjusting device has an extended leg (10a, 10b)to which the support element (3) is attached off-centre, and in that either of the two ends of the leg (10a, 10b) can be shifted, as desired, into a position close to the roller carrier (2).

8. Conveying device according to Claim 7, characterized in that the leg (10a, 10b) is part of a wire loop (10).

9. Conveying device according to one of Claims 1 to 8, characterized in that each coupling part (20, 21) possesses a base part (22) rigidly connected to the yoke (4) of the roller carrier (2) and a hook (24) provided with a hub (26) and arranged in the base part (22) so as to be pivotable horizontally about an axis (23), so that the hub (26) of each of the two coupling parts (20, 21) is clasped by the hook (24) of the other coupling part (21, 20) when in the coupled condition.

10. Conveying device according to Claim 9, characterized in that each hook (24) has a forwardly tapering cross-section in a forward region (24a) extending towards the mating coupling part (20, 21).

11. Conveying device according to Claim 9 or 10, characterized in that each hook (24) is shaped in its forward region (24a) for engagement with a rear region (24b) of the mating coupling part (20, 21) located between the hub (26) and the yoke (4) of the roller carrier (2).

12. Conveying device for an overhead conveyor system according to one of Claims 1 to 11, characterized in that the roller carrier (2) has a V- or C-shaped yoke (4) made of plastic material on which at least one coupling part (7, 8, 20, 21) is formed.

## Revendications

1. Moyen de transfert pour un système de convoyeur aérien, avec deux supports de galets de roulement (2) pour rouler sur un rail (6), et avec un élément porteur (3), assemblé avec les supports de galets de roulement (2), et sur lequel sont disposés les objets à transporter, chaque support de galet de roulement (2) présentant deux galets (5), assemblés entre eux au moyen d'un étrier (4), et avec un élément d'accouplement (7, 8, 20, 21) pour l'accouplement sur un élément d'accouplement correspondant d'un autre moyen de transfert, caractérisé en ce que l'élément d'accouplement (7, 8, 20, 21) est disposé sur l'étrier (4) du support de galet de roulement (2).

2. Moyen de transfert suivant la revendication 1, caractérisé en ce que deux éléments d'accouplement (7, 8, 21, 21) sont disposés sur l'étrier (4) du support de galet de roulement (2), le premier élément d'accouplement (7, 20) étant disposé sur un côté de l'étrier (4), et le second élément d'accouplement (8, 21) sur le côté opposé de l'étrier (4).

3. Moyen de transfert suivant l'une des revendications 1 et 2, caractérisé en ce que l'élément porteur (3, 16) est disposé, avec une possibilité de pivotement dans le sens vertical, sur un support de galet de roulement (2) au moins.

4. Moyen de transfert suivant l'une quelconque des revendications 1 à 3, caractérisé en ce que l'élément porteur (16) dépasse du support de galet de roulement (2) dans le sens de transport (A).

5. Moyen de transfert suivant la revendication 4, caractérisé en ce que l'élément porteur (16) est disposé sur les supports de galets de roulement (2), avec des pièces d'extrémité (16a, 16b) essentiellement en forme de C.

6. Moyen de transfert suivant l'une quelconque des revendications 1 à 4, caractérisé en ce que l'élément porteur (3) est assemblé avec les supports de galets de roulement (2) par L'intermédiaire d'un dispositif de réglage (10), pour modifier la distance entre l'élément porteur (3) et le rail (6).

7. Moyen de transfert suivant la revendication 6, caractérisé en ce que le dispositif de réglage comporte une branche (10a, 10b) allongée, sur laquelle est fixé l'élément porteur (3) d'une manière excentrée, et en ce que les deux extrémités de la branche (10a, 10b) peuvent être amenées sélectivement dans une position contiguë au support de galet de roulement (2).

8. Moyen de transfert suivant la revendication 7, caractérisé en ce que la branche (10a, 10b) fait partie d'une boucle métallique (10).

9. Moyen de transfert suivant l'une quelconque des revendications 1 à 8, caractérisé en ce que chaque élément d'accouplement (20, 21) présente une partie de base (22), rigidement assemblée avec l'étrier (4) du support de galet de roulement (2), et un crochet (24), muni d'un moyeu (26) et disposé dans la partie de base (22) avec une possibilité de pivotement autour d'un axe (23), dans le sens horizontal, les moyeux (26) des deux éléments d'accouplement (20, 21) étant enveloppés, à l'état d'accouplement, par le crochet (24) de l'autre élément d'accouplement (21, 20).

10. Moyen de transfert suivant la revendication 9, caractérisé en ce que chaque crochet (24) présente, dans une zone avant (24a) s'étendant en direction de l'élément d'accouplement correspondant (20, 21), une section rétrécie vers l'avant.

11. Moyen de transfert suivant l'une des revendications 9 et 10, caractérisé en ce que chaque crochet (24) est réalisé dans sa zone avant (24a) pour sa mise en prise avec une zone arrière (24b) de l'élément d'accouplement correspondant (20, 21), située entre le moyeu (26) et l'étrier (4) du support de galet de roulement (2).

12. Moyen de transfert pour un système de convoyeur aérien, suivant l'une quelconque des revendications 1 à 11, caractérisé en ce que le support de galet de roulement (2) présente un étrier (4) de matière plastique, en V ou en C, sur lequel est formé un élément d'accouplement (7, 8, 20, 21), au moins.
